# EUROPÄISCHE PATENTSCHRIFT

(11) **EP 3 199 389 B1**
(45) Veröffentlichungstag und Bekanntmachung des Hinweises auf die Patenterteilung: **22.08.2018**
(21) Anmeldenummer: 16204932.4
(22) Anmeldetag: 19.12.2016
(51) Int. Cl.: B60G 7/00, B60G 7/02

(54) **FAHRWERKSLENKER MIT GEKLEBTEM GELENKLAGER**
SUSPENSION ARM COMPRISING A GLUED JOINT
BRAS DE SUSPENSION COMPRENANT UNE ARTICULATION COLLÉE

(30) Priorität: 26.01.2016 DE 102016201037
(43) Veröffentlichungstag der Anmeldung: 02.08.2017
(73) Patentinhaber: ZF Friedrichshafen AG, 88046 Friedrichshafen (DE)
(72) Erfinder: Meindl, Sebastian, 67574 Osthofen (DE); Hagemes, Joerg, 49086 Osnabrueck (DE)

(56) Entgegenhaltungen:
- EP-A1- 2 270 344
- EP-A2- 1 036 680
- DE-A1- 19 520 065
- US-A- 2 879 115
- US-A1- 2013 328 284

## Beschreibung

Die Erfindung betrifft eine Fahrwerkkomponente mit einem ein sich in einer axialen Richtung erstreckendes Lagerauge umfassenden Verbindungsbauteil und einem in das Lagerauge eingepressten und dadurch kraftschlüssig mit dem Verbindungsbauteil verbundenen Gelenkbauteil.

Derartige Fahrwerkkomponenten sind aus dem Stand der Technik bekannt und weisen in der Regel wenigstens ein zusätzliches Gelenkbauteil auf. Sie dienen beispielsweise zur gelenkigen Anbindung eines Radträgers oder Achskörpers an einen Fahrzeugaufbau oder Fahrzeugrahmen. Häufig werden als Gelenkbauteil Kugelhülsengelenke verwendet, welche vorwiegend in das Lagerauge unter Ausbildung einer Presspassung eingepresst werden. Die Presspassung ist zwar einerseits erwünscht, um axiale Lasten aufnehmen zu können. Andererseits führt die Presspassung aber häufig zu erhöhten Bewegungsmomenten des Gelenkbauteils, was unerwünscht ist. Wird lediglich die Aufnahme radialer Lasten betrachtet, so könnte die Presspassung auch geringer ausfallen. Dann ergibt sich allerdings das Problem, dass das Gelenkbauteil in axialer Richtung nicht mehr ausreichend in dem Lagerauge gesichert ist. Abhilfe könnten hier zwar Sicherungselemente schaffen, mittels welchen das Gelenkbauteil in axialer Richtung formschlüssig in dem Lagerauge gesichert wird, das Vorsehen solcher Sicherungselemente erhöht allerdings die Bauteileanzahl und den Montageaufwand.

Aus der EP 2 270 344 A1 ist eine Fahrwerkskomponente bekannt und offenbart den Oberbegriff des unabhängigen Anspruchs 1, wobei ein Kugelgelenk in ein Lagerauge eingepresst wird. Für eine zusätzliche Sicherung ist der Einsatz eine Klebeschicht beschrieben, die am Lagerauge angeordnet werden kann. Der US 2 879 115 A und DE 195 20 065 A1 sind miteinander verklebte Bauteile zu entnehmen, wobei in einen Klebstoffverteilungskanal ein Klebstoffeinfüllkanal mündet. Hierbei ist der Klebstoffeinfüllkanal quer bzw. rechtwinklig zum Klebstoffverteilungskanal ausgerichtet.

Ausgehend hiervon liegt der Erfindung die Aufgabe zugrunde, eine einfache Möglichkeit zu schaffen, eine Erhöhung der Bewegungsmomente des Gelenkbauteils vermeiden zu können.

Diese Aufgabe wird durch eine Fahrwerkkomponente nach Anspruch 1 gelöst. Bevorzugte Weiterbildungen der Fahrwerkkomponente sind in den Unteransprüchen und in der nachfolgenden Beschreibung gegeben.

Die Fahrwerkkomponente weist ein Verbindungsbauteil, welches ein sich in einer axialen Richtung erstreckendes Lagerauge umfasst, und ein in das Lagerauge eingepresstes und dadurch kraftschlüssig mit dem Verbindungsbauteil verbundenes Gelenkbauteil auf, wobei die beiden Bauteile zusätzlich mittels eines Klebstoffs miteinander verklebt sind, der in einen innerhalb des Lagerauges zwischen den Bauteilen vorgesehenen Klebstoffverteilungskanal eingebracht ist, der axial beidseitig durch eines der Bauteile, durch wenigstens eines der Bauteile oder durch die Bauteile begrenzt ist.

Die zusätzliche Klebeverbindung zwischen den Bauteilen übernimmt die axiale Sicherung des Gelenkbauteils in dem Lagerauge. Die Presspassung zwischen den Bauteilen kann somit geringer ausgeführt werden, sodass eine Erhöhung der Bewegungsmomente des Gelenkbauteils vermeidbar ist. Da der Klebstoffverteilungskanal axial beidseitig durch wenigstens eines der Bauteile begrenzt ist, ist die Klebeverbindung ferner vor äußeren Einflüssen geschützt. Auch kann durch die axial beidseitige Begrenzung des Klebstoffverteilungskanals ein Austreten von noch flüssigem Klebstoff verhindert werden.

Dem Lagerauge ist bevorzugt eine sich in axialer Richtung erstreckende Längsmittelachse zugeordnet. Insbesondere ist das Lagerauge bezüglich der Längsmittelachse rotationssymmetrisch oder im Wesentlichen rotationssymmetrisch. Vorzugsweise umfasst das Lagerauge eine Innenumfangsfläche. Bevorzugt ist die Innenumfangsfläche des Lagerauges umlaufend und/oder ringförmig und/oder zylindrisch ausgebildet. Insbesondere erstreckt sich die Innenumfangsfläche des Lagerauges um die Längsmittelachse herum. Vorteilhaft ist die Innenumfangsfläche des Lagerauges bezüglich der Längsmittelachse rotationssymmetrisch oder im Wesentlichen rotationssymmetrisch. Insbesondere erstreckt sich das Lagerauge in axialer Richtung durch das Verbindungsbauteil hindurch. Unter "radial" und/oder "radialer Richtung" ist insbesondere eine oder jedwede Richtung zu verstehen, die quer zur axialen Richtung und/oder zur Längsmittelachse verläuft.

Das Gelenkbauteil umfasst bevorzugt eine Außenumfangsfläche. Vorzugsweise ist die Außenumfangsfläche des Gelenkbauteils umlaufend und/oder ringförmig und/oder zylindrisch ausgebildet. Insbesondere erstreckt sich die Außenumfangsfläche des Gelenkbauteils um die Längsmittelachse herum. Vorteilhaft ist die Außenumfangsfläche des Gelenkbauteils bezüglich der Längsmittelachse rotationssymmetrisch oder im Wesentlichen rotationssymmetrisch. Die kraftschlüssige Verbindung ist insbesondere zwischen der Innenumfangsfläche des Lagerauges und der Außenumfangsfläche des Gelenkbauteils vorgesehen und/oder ausgebildet.

Gemäß einer Weiterbildung verläuft der Klebstoffverteilungskanal um das Gelenkbauteil und/oder um die Längsmittelachse herum und/oder umringt das Gelenkbauteil und/oder die Längsmittelachse. Bevorzugt ist der Klebstoffverteilungskanal umlaufend und/oder ringförmig ausgebildet. Insbesondere ist der Klebstoffverteilungskanals bezüglich der Längsmittelachse rotationssymmetrisch oder im Wesentlichen rotationssymmetrisch. Somit steht eine große Klebefläche zur Verfügung, was die Festigkeit der Klebeverbindung erhöht. Insbesondere ist das Gelenkbauteil umlaufend und/oder rings der Längsmittelachse mit dem Verbindungsbauteil verklebt.

Bevorzugt ist die kraftschlüssige Verbindung axial beidseitig des Klebstoffverteilungskanals vorgesehen und/oder ausgebildet. Insbesondere ist die kraftschlüssige Verbindung in axialen Endbereichen des Lagerauges und/oder in axialen Endabschnitten des Gelenkbauteils vorgesehen und/oder ausgebildet. Somit kann erreicht werden, dass ein axial mittiger Abschnitt des Gelenkbauteils durch die kraftschlüssige Verbindung nicht beeinträchtigt wird, da die Bewegungsmomente des Gelenkbauteils in der Regel besonders sensibel auf eine Verformung dieses axial mittigen Abschnitts reagieren. Erfindungsgemäß ist in dem Verbindungsbauteil ein von außen zugänglicher und in den Klebstoffverteilungskanal einmündender Klebstoffeinfüllkanal vorgesehen. Unter dem Begriff "von außen zugänglich" ist insbesondere zu verstehen, dass sich der Klebstoffeinfüllkanal bis zu einer Außenfläche des Verbindungsbauteils erstreckt. Durch den Klebstoffeinfüllkanal ist oder wird der Klebstoff, insbesondere nach dem Einpressen des Gelenkbauteils in das Lagerauge, in den Klebstoffverteilungskanal eingebracht. Das Einbringen des Klebstoffs in den Klebstoffverteilungskanal nach dem Einpressen des Gelenkbauteils in das Lagerauge bietet den Vorteil, dass eine Verschmutzung der Umgebung durch Austropfen oder Ausschieben von Klebstoff während des Einpressens des Gelenkbauteils in das Lagerauge vermieden werden kann. Der Klebstoffeinfüllkanal verläuft insbesondere gerade. Beispielsweise ist der Klebstoffeinfüllkanal durch eine in das Verbindungsbauteil eingebrachte Bohrung gebildet. Erfindungsgemäß verläuft der Klebstoffeinfüllkanal tangential oder näherungsweise tangential zum Klebstoffverteilungskanal. Bevorzugt verläuft der Klebstoffeinfüllkanal tangential oder näherungsweise tangential zu der Innenumfangsfläche des Lagerauges. Hierdurch kann beim Einbringen des Klebstoffs in den Klebstoffverteilungskanal dem in den Klebstoffverteilungskanal einströmenden Klebstoff eine Strömungsrichtung vorgegeben werden. Bevorzugt schließt der Klebstoffeinfüllkanal mit einer senkrecht zur Längsmittelachse ausgerichteten und von der Längsmittelachse bis zur Einmündung des Klebstoffeinfüllkanals in den Klebstoffverteilungskanal verlaufenden Strecke einen Klebstoffeinfüllkanalwinkel ein, der insbesondere 90°oder näherungsweise 90° beträgt.

Gemäß einer Ausgestaltung ist in dem Verbindungsbauteil ein von außen zugänglicher und in den Klebstoffverteilungskanal einmündender Entlüftungskanal vorgesehen. Unter dem Begriff "von außen zugänglich" ist insbesondere zu verstehen, dass sich der Entlüftungskanal bis zu einer Außenfläche des Verbindungsbauteils erstreckt. Der Entlüftungskanal dient insbesondere dazu, in dem Klebstoffverteilungskanal eingeschlossene Luft während des Einbringens des Klebstoffs in den Klebstoffverteilungskanal nach außen abzuführen und/oder an die Umgebung abzugeben. Andernfalls würde diese Luft während des Einbringens des Klebstoffs in den Klebstoffverteilungskanal komprimiert und dem Einbringen des Klebstoffs entgegen wirken. Durch das Abführen der Luft durch den Entlüftungskanal ist insbesondere eine homogenere Verteilung des Klebstoffs innerhalb des Klebstoffverteilungskanals erzielbar. Bevorzugt ist die Querschnittsfläche des Entlüftungskanals möglichst klein zu halten, sodass kein oder möglichst wenig Klebstoff aus dem Entlüftungskanal austreten kann. Insbesondere ist die Querschnittsfläche des Entlüftungskanals kleiner als die Querschnittsfläche des Klebstoffeinfüllkanals. Der Entlüftungskanal verläuft insbesondere gerade. Beispielsweise ist der Entlüftungskanal durch eine in das Verbindungsbauteil eingebrachte Bohrung gebildet.

Gemäß einer Weiterbildung sind der Klebstoffeinfüllkanal und der Entlüftungskanal zum Klebstoffverteilungskanal hin aufeinander zu geneigt. Somit schließen der Entlüftungskanal und der Klebstoffeinfüllkanal insbesondere einen Kanaldifferenzwinkel ein. Dadurch ist es möglich, die Einmündung des Entlüftungskanals in den Klebstoffverteilungskanal nahe an die Einmündung des Klebstoffeinfüllkanals in den Klebstoffverteilungskanal heranzubringen. Bevorzugt liegt der Entlüftungskanal in Einlaufrichtung des Klebstoffs hinter dem Klebstoffeinfüllkanal. Somit kann nahezu der gesamte Klebstoffverteilungskanal mit Klebstoff gefüllt werden, bevor der Klebstoff den Entlüftungskanal erreicht. Dadurch ist insbesondere ein vollflächiger oder nahezu vollflächiger Klebestoffeintrag in den Klebstoffverteilungskanal erzielbar. Ferner kann durch ein Austreten von Klebstoff aus dem Entlüftungskanal nach außen erkannt werden, dass eine ausreichende Menge Klebstoff in den Klebstoffverteilungskanal eingebracht ist und der Vorgang des Einbringens von Klebstoff in den Klebstoffverteilungskanal beendet werden kann. Bevorzugt schließt der Entlüftungskanal mit einer senkrecht zur Längsmittelachse ausgerichteten und von der Längsmittelachse bis zur Einmündung des Entlüftungskanals in den Klebstoffverteilungskanal verlaufenden Strecke einen Entlüftungskanalwinkel ein, der insbesondere kleiner als 90° ist. Vorzugsweise ist der Entlüftungskanalwinkel kleiner als der Klebstoffeinfüllkanalwinkel.

Das Lagerauge ist bevorzugt eine in dem Verbindungsbauteil vorgesehene Ausnehmung, die insbesondere von einer Wandung begrenzt ist, die vorzugsweise durch das Verbindungsbauteil gebildet ist und/oder einen Teil des Verbindungsbauteils bildet. Vorteilhaft erstreckt sich die Ausnehmung in axialer Richtung durch das Verbindungsbauteil hindurch. Die Wandung ist bevorzugt umlaufend und/oder ringförmig und/oder zylindrisch ausgebildet. Insbesondere verläuft die Wandung um das Gelenkbauteil und/oder um die Längsmittelachse herum und/oder umringt das Gelenkbauteil und/oder die Längsmittelachse. Vorteilhaft ist die Wandung bezüglich der Längsmittelachse rotationssymmetrisch oder näherungsweise rotationssymmetrisch. Die Wandung umfasst insbesondere die Innenumfangsfläche des Lagerauges. Bevorzugt liegt die Wandung, insbesondere bereichsweise oder zumindest bereichsweise, an dem Gelenkbauteil an. Die kraftschlüssige Verbindung ist vorzugsweise zwischen der Wandung oder Verbindungsbereichen der Wandung und dem Gelenkbauteil oder der Außenumfangsfläche des Gelenkbauteils vorgesehen und/oder ausgebildet. Bei den Verbindungsbereichen der Wandung handelt es sich bevorzugt um zwei Bereiche der Wandung und/oder um axiale Endbereiche der Wandung. Die Verbindungsbereiche der Wandung sind insbesondere umlaufendend und/oder ringförmig und/oder zylindrisch ausgebildet. Vorteilhaft verlaufen die Verbindungsbereiche der Wandung um das Gelenkbauteil und/oder um die Längsmittelachse herum und/oder umringen das Gelenkbauteil und/oder die Längsmittelachse. Insbesondere sind die Verbindungsbereiche der Wandung bezüglich der Längsmittelachse rotationssymmetrisch oder näherungsweise rotationssymmetrisch.

Vorzugsweise ist der Klebstoffverteilungskanal axial beidseitig durch das Verbindungsbauteil und/oder durch das Lagerauge und/oder durch die Verbindungsbereiche der Wandung begrenzt. Das Lagerauge und/oder dessen Innenumfangsfläche und/oder die Wandung umfasst bevorzugt zwei axiale Endbereiche oder die axialen Endbereiche und einen, insbesondere in axialer Richtung, zwischen den axialen Endbereichen liegenden mittleren Bereich, in dem insbesondere der Klebstoffverteilungskanal vorgesehen ist. Die axialen Endbereiche und/oder der mittlere Bereich sind vorzugsweise umlaufendend und/oder ringförmig und/oder zylindrisch ausgebildet. Vorteilhaft verlaufen die axialen Endbereiche und/oder der mittlere Bereich um das Gelenkbauteil und/oder um die Längsmittelachse herum und/oder umringen das Gelenkbauteil und/oder die Längsmittelachse. Insbesondere sind die axialen Endbereiche und/oder der mittlere Bereich bezüglich der Längsmittelachse rotationssymmetrisch oder näherungsweise rotationssymmetrisch. Die axialen Endbereiche sind bevorzugt durch die Verbindungsbereiche der Wandung gebildet und/oder umfassen oder bilden die Verbindungsbereiche der Wandung. Die kraftschlüssige Verbindung ist insbesondere zwischen dem Gelenkbauteil oder dessen Außenumfangsfläche und den axialen Endbereichen vorgesehen und/oder ausgebildet.

Gemäß einer Weiterbildung ist der Klebstoffverteilungskanal durch eine in die Innenumfangsfläche und/oder in die Wandung des Lagerauges eingebrachte Nut gebildet, die insbesondere eine Ringnut ist. Die Nut bildet vorzugsweise einen Bereich des Lagerauges. Der Nutgrund der Nut bildet bevorzugt einen Bereich der Innenumfangsfläche des Lagerauges und/oder der Wandung. Insbesondere bilden die Nut und/oder der Nutgrund den mittleren Bereich. Vorteilhaft springen die axialen Endbereiche und/oder die Verbindungsbereiche der Wandung gegenüber dem Nutgrund der Nut und/oder gegenüber dem mittleren Bereich nach radial innen und/oder in Richtung auf das Gelenkbauteil und/oder dessen Außenumfangsfläche hin vor.

Das Gelenkbauteil umfasst bevorzugt ein Gelenkgehäuse, welches insbesondere die Außenumfangsfläche des Gelenkbauteils aufweist. Bevorzugt ist das Gelenkgehäuse umlaufend und/oder ringförmig und/oder zylindrisch ausgebildet. Insbesondere verläuft das Gelenkgehäuse um die Längsmittelachse herum und/oder umringt die Längsmittelachse. Vorteilhaft ist das Gelenkgehäuse bezüglich der Längsmittelachse rotationssymmetrisch oder näherungsweise rotationssymmetrisch. Insbesondere erstreckt sich das Gelenkgehäuse in axialer Richtung. Die kraftschlüssige Verbindung ist insbesondere zwischen dem Gelenkgehäuse und den axialen Endbereichen und/oder der Wandung und/oder Bereichen der Wandung vorgesehen und/oder ausgebildet. Die Bereiche der Wandung sind vorzugsweise die Verbindungsbereiche der Wandung. Das Gelenkgehäuse ist z.B. durch eine Hülse gebildet, die auch als Außenhülse bezeichnet werden kann. Beispielsweise besteht das Gelenkgehäuse aus Kunststoff oder aus Metall, insbesondere aus Stahl, Aluminium oder Magnesium. Bevorzugt umfasst das Gelenkbauteil ein Gelenkinnenteil, welches insbesondere gelenkig und/oder bewegbar in dem Gelenkgehäuse gelagert ist. Das Gelenkinnenteil ist vorzugsweise umlaufend und/oder ringförmig und/oder zylindrisch ausgebildet. Bevorzugt verläuft das Gelenkinnenteil, insbesondere im nicht ausgelenkten Zustand des Gelenkbauteils, um die Längsmittelachse herum und/oder umringt die Längsmittelachse. Vorteilhaft ist das Gelenkinnenteil rotationssymmetrisch oder näherungsweise rotationssymmetrisch. Insbesondere erstreckt sich das Gelenkinnenteil, insbesondere im nicht ausgelenkten Zustand des Gelenkbauteils, in axialer Richtung. Das Gelenkinnenteil besteht z.B. aus Kunststoff oder aus Metall, insbesondere aus Stahl, Aluminium oder Magnesium.

Gemäß einer Ausgestaltung ist das Gelenkbauteil ein Kugelhülsengelenk. In diesem Fall ist das Gelenkgehäuse insbesondere durch die Außenhülse gebildet. Ferner ist das Gelenkinnenteil bevorzugt durch eine Kugelhülse gebildet.

Das Verbindungsbauteil ist z.B. als langgesteckter Körper oder als dreieckförmiger Körper ausgebildet. Bevorzugt bildet das Verbindungsbauteil einen Fahrwerklenker, wie z.B. einen Querlenker, einen Dreiecklenker, einen Längslenker oder einen Achslenker. Vorteilhaft besteht das Verbindungsbauteil aus Kunststoff oder aus Metall, insbesondere aus Stahl, Aluminium oder Magnesium. Das Verbindungsbauteil besteht z.B. aus Vollmaterial und/oder aus Blech.

Das Verbindungsbauteil ist mittels des Gelenkbauteils bevorzugt mit einem anderen Fahrzeugbauteil oder Fahrwerkbauteil verbunden. Insbesondere ist das Gelenkinnenteil mit dem oder einem anderen Fahrzeugbauteil oder Fahrwerkbauteil verbunden. Bei dem Fahrzeugbauteil oder Fahrwerkbauteil handelt es sich z.B. um einen Fahrzeugaufbau oder Fahrzeugrahmen, um einen Hilfsrahmen oder Fahrschemel, um einen Radträger oder um einen Achskörper.

Gemäß einer Weiterbildung ist mit dem Verbindungsbauteil ein oder wenigstens ein zusätzliches Gelenkbauteil verbunden. Beispielsweise sind mit dem Verbindungsbauteil zwei zusätzliche Gelenkbauteile verbunden.

Die Fahrwerkkomponente ist bevorzugt für ein Fahrzeug oder Kraftfahrzeug vorgesehen. Insbesondere ist die Fahrwerkkomponente in das Fahrwerk eines Fahrzeugs oder Kraftfahrzeugs eingebaut.

Die Erfindung wird nachfolgend anhand einer bevorzugten Ausführungsform unter Bezugnahme auf die Zeichnung beschrieben. In der Zeichnung zeigen:
Fig. 1 eine perspektivische Teilansicht einer ein Verbindungsbauteil und ein Gelenkbauteil umfassenden Fahrwerkkomponente gemäß einer Ausführungsform,
Fig. 2 eine perspektivische Teilansicht des Verbindungsbauteils in Einzeldarstellung und
Fig. 3 eine Schnittansicht des Verbindungsbauteils entlang einer aus Fig. 2 ersichtlichen Schnittlinie A-A.

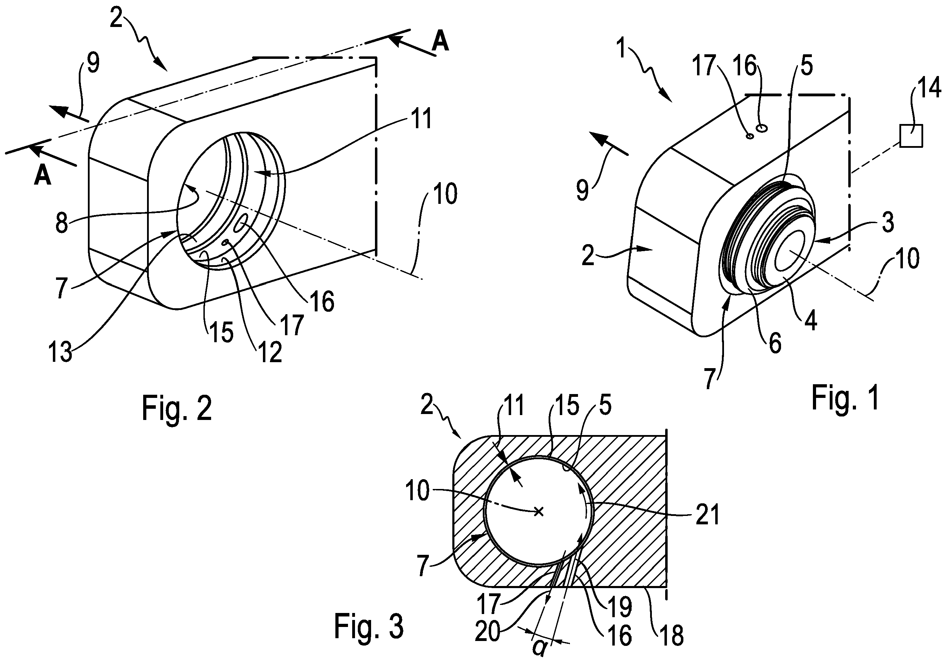

Aus Fig. 1 eine perspektivische Teilansicht einer Fahrwerkkomponente 1 gemäß einer Ausführungsform ersichtlich, wobei die Fahrwerkkomponente 1 ein Verbindungsbauteil 2 und ein von diesem aufgenommenes Gelenkbauteil 3 umfasst. Ferner zeigt Fig. 2 eine perspektivische Teilansicht des Verbindungsbauteils 2 in Einzeldarstellung. Das Verbindungsbauteil 2 bildet gemäß der Ausführungsform einen Fahrwerklenker und ist an seinem aus den Figuren nicht ersichtlichen Ende mit einem zusätzlichen Gelenkbauteil 14 verbunden, welches lediglich schematisch angedeutet ist.

Das Gelenkbauteil 3 ist als Kugelhülsengelenk ausgebildet und weist eine Kugelhülse 4 auf, die von einer Außenhülse 5 umringt ist, in der die Kugelhülse 4 gelenkig gelagert ist. Ferner ist zwischen der Kugelhülse 4 und der Außenhülse 5 ein Dichtungsbalg 6 vorgesehen. Das Gelenkbauteil 3 ist mit seiner Außenhülse 5 in ein in dem Verbindungsbauteil 2 vorgesehenes Lagerauge 7 eingepresst und somit kraftschlüssig mit dem Verbindungsbauteil 2 verbunden. Das Lagerauge 7 ist von einer umlaufen Wandung 8 des Verbindungsbauteils 2 begrenzt, die sich rings einer in einer axialen Richtung 9 verlaufenden Längsmittelachse 10 erstreckt. Ferner erstreckt sich das Lagerauge 7 in der axialen Richtung 9 durch das Verbindungsbauteil 2 hindurch.

In die Wandung 8 des Lagerauges 7 ist eine Ringnut 11 eingebracht, die sich rings der Längsmittelachse 10 erstreckt. Die Ringnut 11 unterteilt die Wandung 8 in axialer Richtung 9 in drei axiale Bereiche, nämlich in zwei axiale Endbereiche 12 und 13 und einen in axialer Richtung 9 zwischen den Endbereichen 12 und 13 liegenden mittleren Bereich, der durch den Nutgrund 15 der Ringnut 11 gebildet ist. Im eingepressten Zustand das Gelenkbauteils 3 ist die kraftschlüssige Verbindung zwischen dem Gelenkbauteil 3 und dem Verbindungsbauteil 2 zwischen den beiden Endbereichen 12 und 13 und der Außenhülse 5 ausgebildet.

Fig. 3 zeigt eine Schnittansicht des Verbindungsbauteils 2, wobei der Schnitt senkrecht zur Längsmittelachse 10 und entlang einer aus Fig. 2 ersichtlichen Schnittlinie A-A erfolgt ist. Ferner ist die in das Lagerauge 7 eingepresste Außenhülse 5 des Gelenkbauteils 3 schematisch dargestellt. Wie aus Fig. 3 ersichtlich, sind in das Verbindungsbauteil 2 zwei Bohrungen 16 und 17 eingebracht, die sich von der Außenfläche 18 des Verbindungsbauteils 2 bis zum Nutgrund 15 der Ringnut 11 erstrecken und in diese einmünden. Die Bohrung 16 weist einen größeren Durchmesser als die Bohrung 17 auf und bildet einen Klebstoffeinfüllkanal, durch welchen nach dem Einpressen des Gelenkbauteils 3 in das Lagerauge 7 ein Klebstoff in die Ringnut 11 eingebracht wird. Das Einbringen des Klebstoffs durch die Bohrung 16 in die Ringnut 11 ist dabei durch den Pfeil 19 angedeutet. Die Bohrung 17 bildet einen Entlüftungskanal, durch welchen zwischen der Wandung 8 und der Außenhülse 5 in der Ringnut 11 eingeschlossene Luft während des Einbringens des Klebstoffs nach außen entweichen kann. Der Austritt von Luft aus der Ringnut 11 durch die Bohrung 17 ist dabei durch den Pfeil 20 angedeutet.

Der Klebstoffeinfüllkanal 16 ist näherungsweise tangential zur Ringnut 11 und/oder zum Lagerauge 7 ausgerichtet, sodass dem Klebstoff beim Eintritt in die Ringnut 11 eine Strömungsrichtung vorgegeben wird, die durch den Pfeil 21 angedeutet ist. Der Klebstoff verteilt sich somit in Richtung des Pfeils 21 in der Ringnut 11 und umströmt dabei die Außenhülse 5. Die Ringnut 11 bildet folglich einen Klebstoffverteilungskanal. Erreicht der Klebstoff die Bohrung 17 und/oder tritt Klebstoff aus der Bohrung 17 nach außen aus, kann das Einbringen von Klebstoff durch die Bohrung 16 beendet werden. Nach dem Aushärten des Klebstoffs ist die Außenhülse 5 mit dem Verbindungsbauteil 2 nicht nur kraftschlüssig, sondern auch stoffschlüssig in axialer Richtung verbunden, insbesondere verklebt.

Die Bohrungen 16 und 17 verlaufen nicht parallel, sondern sind zur Ringnut 11 hin aufeinander zu geneigt. Sie schließen somit einen Winkel α miteinander ein, der auch als Kanaldifferenzwinkel bezeichnet wird. Der Winkel α trägt dazu bei, dass die Einmündung der Bohrung 17 in die Ringnut 11 nahe an die Einmündung der Bohrung 16 in die Ringnut 11 herangebracht werden kann. Dies ist zweckmäßig, damit ein möglichst großer Teil des Umfangs der Außenhülse 5 von dem Klebstoff umströmt werden kann.

### Bezugszeichen

- 1: Fahrwerkkomponente
- 2: Verbindungsbauteil
- 3: Gelenkbauteil
- 4: Kugelhülse des Gelenkbauteils
- 5: Außenhülse des Gelenkbauteils
- 6: Dichtungsbalg des Gelenkbauteils
- 7: Lagerauge im Verbindungsbauteil
- 8: Wandung des Lagerauges
- 9: axiale Richtung
- 10: Längsmittelachse
- 11: Ringnut / Klebstoffverteilungskanal
- 12: axialer Endbereich der Wandung
- 13: axialer Endbereich der Wandung
- 14: zusätzliches Gelenkbauteil
- 15: Nutgrund der Ringnut
- 16: Bohrung / Klebstoffeinfüllkanal
- 17: Bohrung / Entlüftungskanal
- 18: Außenfläche des Verbindungsbauteils
- 19: Einbringen von Klebstoff
- 20: Austritt von Luft / Entlüften
- 21: Strömungsrichtung des Klebstoffs
- α: Kanaldifferenzwinkel

## Patentansprüche

1. Fahrwerkkomponente mit einem ein sich in einer axialen Richtung (9) erstreckendes Lagerauge (7) umfassenden Verbindungsbauteil (2) und einem in das Lagerauge (7) eingepressten und dadurch kraftschlüssig mit dem Verbindungsbauteil (2) verbundenen Gelenkbauteil (3),wobei die beiden Bauteile (2, 3) zusätzlich mittels eines Klebstoffs miteinander verklebt sind, der in einen innerhalb des Lagerauges (7) zwischen den Bauteilen (2, 3) vorgesehenen und axial beidseitig durch wenigstens eines der Bauteile (2) begrenzten Klebstoffverteilungskanal (11) eingebracht ist, **dadurch gekennzeichnet, dass** in dem Verbindungsbauteil (2) ein von außen zugänglicher und in den Klebstoffverteilungskanal (11) einmündender Klebstoffeinfüllkanal (16) vorgesehen ist und der Klebstoffeinfüllkanal (16) tangential oder näherungsweise tangential zum Klebstoffverteilungskanal (11) verläuft, wodurch beim Einbringen des Klebstoffs in den Klebstoffverteilungskanal (11) dem in den Klebstoffverteilungskanal (11) einströmenden Klebstoff eine Strömungsrichtung vorgebbar ist.

2. Fahrwerkkomponente nach Anspruch 1, **dadurch gekennzeichnet, dass** der Klebstoffverteilungskanal (11) um das Gelenkbauteil (3) herum verläuft.

3. Fahrwerkkomponente nach Anspruch 1 oder 2, **dadurch gekennzeichnet, dass** die kraftschlüssige Verbindung axial beidseitig des Klebstoffverteilungskanals (11) vorgesehen ist.

4. Fahrwerkkomponente nach einem der vorhergehenden Ansprüche, **dadurch gekennzeichnet, dass** der Klebstoffeinfüllkanal (16) tangential oder näherungsweise tangential zur Innenumfangsfläche des Lagerauges (7) verläuft.

5. Fahrwerkkomponente nach einem der vorhergehenden Ansprüche, **dadurch gekennzeichnet, dass** in dem Verbindungsbauteil (2) ein von außen zugänglicher und in den Klebstoffverteilungskanal (11) einmündender Entlüftungskanal (17) vorgesehen ist.

6. Fahrwerkkomponente nach Anspruch 5, **dadurch gekennzeichnet, dass** die Querschnittsfläche des Entlüftungskanals (17) kleiner als die Querschnittsfläche des Klebstoffeinfüllkanals (16) ist.

7. Fahrwerkkomponente nach Anspruch 5 oder 6, **dadurch gekennzeichnet, dass** der Klebstoffeinfüllkanal (16) und der Entlüftungskanal (17) zum Klebstoffverteilungskanal (11) hin aufeinander zu geneigt sind.

8. Fahrwerkkomponente nach einem der vorangehenden Ansprüche, **dadurch gekennzeichnet, dass** der Klebstoffverteilungskanal (11) als Nut in die Innenumfangsfläche des Lagerauges (7) eingebracht ist.

9. Fahrwerkkomponente nach einem der vorangehenden Ansprüche, **dadurch gekennzeichnet, dass** das Gelenkbauteil (3) ein Kugelhülsengelenk ist.

10. Fahrwerkkomponente nach einem der vorangehenden Ansprüche, **dadurch gekennzeichnet, dass** das Verbindungsbauteil (2) ein Fahrwerklenker ist.

11. Fahrwerkkomponente nach einem der vorangehenden Ansprüche, **dadurch gekennzeichnet, dass** mit dem Verbindungsbauteil (2) wenigstens ein zusätzliches Gelenkbauteil (14) verbunden ist.

## Claims

1. Chassis component having a connecting component (2) which extends in an axial direction (9) and comprises a bearing socket (7), and having a joint component (3) which is pressed into the bearing socket (7) and is connected in a non-positive manner to the connecting component (2) as a result, the two components (2, 3) additionally being adhesively bonded to one another by means of an adhesive which is introduced into an adhesive distribution channel (11) which is provided within the bearing socket (7) between the components (2, 3) and is delimited axially on both sides by way of at least one of the components (2), **characterized in that** an adhesive filling channel (16) which is accessible from the outside and opens into the adhesive distribution channel (11) is provided in the connecting component (2), and the adhesive filling channel (16) runs tangentially or approximately tangentially with respect to the adhesive distribution channel (11), as a result of which, during the introduction of the adhesive into the adhesive distribution channel (11), a flow direction can be predefined for the adhesive which flows into the adhesive distribution channel (11).

2. Chassis component according to Claim 1, **characterized in that** the adhesive distribution channel (11) runs around the joint component (3).

3. Chassis component according to Claim 1 or 2, **characterized in that** the non-positive connection is provided axially on both sides of the adhesive distribution channel (11).

4. Chassis component according to one of the preceding claims, **characterized in that** the adhesive filling channel (16) runs tangentially or approximately tangentially with respect to the inner circumferential face of the bearing socket (7).

5. Chassis component according to one of the preceding claims, **characterized in that** a venting channel (17) which is accessible from the outside and opens into the adhesive distribution channel (11) is provided in the connecting component (2).

6. Chassis component according to Claim 5, **characterized in that** the cross-sectional area of the venting channel (17) is smaller than the cross-sectional area of the adhesive filling channel (16).

7. Chassis component according to Claim 5 or 6, **characterized in that** the adhesive filling channel (16) and the venting channel (17) are inclined towards one another in the direction of the adhesive distribution channel (11).

8. Chassis component according to one of the preceding claims, **characterized in that** the adhesive distribution channel (11) is made as a groove in the inner circumferential face of the bearing socket (7).

9. Chassis component according to one of the preceding claims, **characterized in that** the joint component (3) is a ball sleeve joint.

10. Chassis component according to one of the preceding claims, **characterized in that** the connecting component (2) is a chassis link.

11. Chassis component according to one of the preceding claims, **characterized in that** at least one additional joint component (14) is connected to the connecting component (2).

## Revendications

1. Composant de châssis comprenant un composant de liaison (2) comportant un trou de palier (7) s'étendant dans une direction axiale (9) et un composant d'articulation (3) pressé dans le trou de palier (7) et donc connecté par force au composant de liaison (2), les deux composants (2, 3) étant en outre collés l'un à l'autre au moyen d'un adhésif qui est introduit dans un canal de distribution d'adhésif (11) prévu à l'intérieur du trou de palier (7) entre les composants (2, 3) et limité axialement des deux côtés par au moins l'un des composants (2),
**caractérisé en ce qu'**un canal de remplissage d'adhésif (16) débouchant dans le canal de distribution d'adhésif (11) et accessible depuis l'extérieur est prévu dans le composant de liaison (2), et le canal de remplissage d'adhésif (16) s'étend tangentiellement ou presque tangentiellement au canal de distribution d'adhésif (11), de sorte que lors de l'introduction de l'adhésif dans le canal de distribution d'adhésif (11), un sens d'écoulement de l'adhésif affluant dans le canal de distribution d'adhésif (11) puisse être prédéfini.

2. Composant de châssis selon la revendication 1, **caractérisé en ce que** le canal de distribution d'adhésif (11) s'étend tout autour du composant d'articulation (3).

3. Composant de châssis selon la revendication 1 ou 2, **caractérisé en ce que** la connexion par force est prévue axialement des deux côtés du canal de distribution d'adhésif (11).

4. Composant de châssis selon l'une quelconque des revendications précédentes, **caractérisé en ce que** le canal de remplissage d'adhésif (16) s'étendant tangentiellement ou presque tangentiellement à la surface périphérique intérieure du trou de palier (7) .

5. Composant de châssis selon l'une quelconque des revendications précédentes, **caractérisé en ce que** dans le composant de liaison (2) est prévu un canal de désaérage (17) débouchant dans le canal de distribution d'adhésif (11) et accessible depuis l'extérieur.

6. Composant de châssis selon la revendication 5, **caractérisé en ce que** la surface en section transversale du canal de désaérage (17) est inférieure à la surface en section transversale du canal de remplissage d'adhésif (16).

7. Composant de châssis selon la revendication 5 ou 6, **caractérisé en ce que** le canal de remplissage d'adhésif (16) et le canal de désaérage (17) sont inclinés l'un vers l'autre vers le canal de distribution d'adhésif (11).

8. Composant de châssis selon l'une quelconque des revendications précédentes, **caractérisé en ce que** le canal de distribution d'adhésif (11) est réalisé sous forme de rainure dans la surface périphérique intérieure du trou de palier (7).

9. Composant de châssis selon l'une quelconque des revendications précédentes, **caractérisé en ce que** le composant d'articulation (3) est une articulation à douille sphérique.

10. Composant de châssis selon l'une quelconque des revendications précédentes, **caractérisé en ce que** le composant de liaison (2) est un bras de suspension.

11. Composant de châssis selon l'une quelconque des revendications précédentes, **caractérisé en ce qu'**au moins un composant d'articulation supplémentaire (14) est connecté au composant de liaison (2).
